# EUROPEAN PATENT APPLICATION

(11) **EP 4 681 955 A1**
(43) Date of publication of application: **21.01.2026**
(21) Application number: 24189180.3
(22) Date of filing: 17.07.2024
(51) Int. Cl.: B60K 28/00, B60K 35/21, B60K 35/25, B60K 35/26, B60W 50/14, G06V 10/82, G06V 20/59, B60K 28/06

(54) **DRIVER MONITORING SYSTEM (DMS) FOR A VEHICLE**

(71) Applicant: Aptiv Technologies AG, 8200 Schaffhausen (CH)
(72) Inventor: HASECKE, Frederik, 8200 Schaffhausen (CH)
(74) Representative: Manitz Finsterwald Patent- und Rechtsanwaltspartnerschaft mbB

(57) **Abstract**

The present disclosure relates to a Driver Monitoring System (DMS) for a vehicle, comprising at least one interior sensor configured to monitor an interior of the vehicle, at least one exterior sensor configured to monitor an environment of the vehicle, and a computing unit, wherein the computing unit is configured to retrieve, analyze and process sensor data from the interior sensor and the exterior sensor; identify a change of the perception in the sensor data from the interior sensor and/or the exterior sensor, wherein the change of the perception is within the field of view of an occupant of the vehicle; assign a virtual focus point to the identified change of the perception; and derive a prediction of the occupant's gaze vector based on the virtual focus point.

## Description

### FIELD

The present disclosure relates to a Driver Monitoring System (DMS) for a vehicle and a method of operating the same.

### BACKGROUND

Vehicle accidents often result from driver inattention or drowsiness. Current Driver Monitoring Systems (DMS) focus on detecting such states using in-vehicle cameras and sensors, coupled with computer vision techniques. Such systems, typically integrated into high-end vehicles, capture and process images to monitor driver behavior, often using a single interior camera. Most DMS solutions may not effectively address unusual cases like visual impairments related for example to strabismus or monocular vision. They also tend to overlook the crucial relationship between the driver's gaze and the external environment of the vehicle. This limitation leads to challenges in accurately assessing the driver's attention, particularly in complex driving scenarios.

Accordingly, there is a need for a more inclusive, cost-effective, and comprehensive DMS system that considers diverse driver conditions and external interactions.

### SUMMARY

The present disclosure provides a Driver Monitoring System (DMS) for a vehicle, a method of operating the same and a non-transitory computer readable medium according to the independent claims. Embodiments are given in the sub-claims, the description and the drawings.

In a first aspect, the present disclosure is directed at a Driver Monitoring System (DMS) for a vehicle, comprising at least one interior sensor configured to monitor an interior of the vehicle, at least one exterior sensor configured to monitor an environment of the vehicle, and a computing unit, wherein the computing unit is configured to retrieve, process and analyze sensor data from the interior sensor and the exterior sensor; identify a change of the perception in the sensor data from the interior sensor and/or the exterior sensor, wherein the change of the perception is within the field of view of an occupant of the vehicle; assign a virtual focus point to the identified change of the perception; and derive a prediction of the occupant's gaze vector based on the virtual focus point.

The occupant may be the driver of the vehicle, but the system is not limited to predict the driver's gaze vector. It may also be adapted to predict the gaze vector of other occupants or passengers of the vehicle having different focus points inside and outside of the vehicle. The system is versatile and applicable to various vehicle types, including passenger cars, commercial vehicles, construction vehicles and motorcycles. It is also applicable for fully autonomous vehicles. In such vehicles, the system's focus shifts to less safety-critical applications, concentrating more on Human Machine Interfaces, Augmented Reality, communication, and comfort. In general, the system is applicable to situations aiming at estimating or determining a person's gaze vector. As such, the system is also applicable to aircrafts and may be used in augmented reality technologies.

The system collects and analyzes data from both interior and exterior sensors. The at least one interior sensor may be a single sensor or may comprise a plurality of similar or different sensors. The interior sensor is configured to monitor the interior of the vehicle. The interior of the vehicle may include the driver of the vehicle, other occupants of the vehicle, the vehicle cabin, the dashboard or other displays within the vehicle. The interior sensor may monitor the driver and/or other occupants of the vehicle. The interior sensor may be a vehicle cabin sensor which directly points to the driver. In particular, the interior sensor may continuously monitor the driver's eyes, gaze and/or overall posture. The interior sensor may also be a vehicle cabin sensor configured to monitor a large fraction of the interior of the vehicle including other occupants or passengers of the vehicle. The interior sensor may be a vehicle cabin sensor configured to monitor the dashboard and/or certain displays within the vehicle. The interior sensor may be mounted in various positions inside the vehicle cabin, for example at a rear-window mirror.

The at least one exterior sensor may be a single sensor or may comprise a plurality of similar or different sensors. The exterior sensor may continuously monitor the environment of the vehicle. The exterior sensor may employ a range of technologies to capture detailed information about the external environment. The data obtained by the exterior sensor may include for example information on traffic movement, road conditions, and proximity to other vehicles, but also on road signs or the presence of pedestrians close to the travel path of the vehicle.

The computing unit is configured to retrieve, process and analyze sensor data from both the interior sensor and the exterior sensor. The computing uses the sensor data to identify changes of the perception within the driver's or occupant's field of view. The identified changes may be changes of the perception of the interior of the vehicle and/or may be changes of the perception of the environment exterior to the vehicle. An event causing a change in the perception within the driver's or occupant's field of view will likely be recognized by the respective person. In response, said person will likely turn his/her gaze towards the event. The system may therefore use the position of the identified event and assign a virtual focus point for the driver's or occupant's gaze to said event. Thereby, the virtual focus point may be represented as a direction within the driver's or occupant's field of view. More accurately, the virtual focus point may be represented in full 3D including a range and a direction within the driver's or occupant's field of view. The virtual focus point identified and assigned by the computing unit is then used by the computing unit to derive a prediction of the driver's or occupant's gaze vector.

In particular, the system uses the relationship between the driver's gaze and changes in the interior or external environment of the vehicle to derive predictions of the driver's gaze vector, enabling to accurately assess the driver's attention, particularly in complex driving scenarios. The system therefore contributes to a safer and more connected driving experience.

The DMS system is inclusive, cost-effective, and comprehensive as it considers diverse driver conditions and external interactions.

According to an embodiment of the first aspect, the computing unit is configured to use sensor data of the interior sensor to estimate the occupant's gaze vector and/or head posture. The sensor data may be obtained by monitoring an occupant of the vehicle, in particular by monitoring the driver of the vehicle. The interior sensor may for example be a vehicle cabin sensor which directly points to the driver. The sensor data of the interior sensor may be used to monitor the driver's head posture and to continuously track the driver's eye position and gaze direction to obtain an estimate or a determination of the driver's gaze vector. The head posture or head pose may also be used for identifying an additional virtual focus point not relying on a change of the perception. Also this additional virtual focus point may be used for the prediction of the driver's gaze vector.

According to an embodiment of the first aspect, the computing unit is configured to refine the estimate of the occupant's gaze vector by comparing the occupant's gaze vector estimated from interior sensor data with the prediction of the occupant's gaze vector using the virtual focus point. Thereby, the computing unit confirms that the occupant's eyes and gaze indeed moved in response to the change of the perception, ensuring that the virtual focus point is an accurate reflection of the occupant's attention and therefore may be used for a refinement of the occupant's gaze vector estimated from interior sensor data. The system therefore employs an autocalibration method which continually aligns the occupant's gaze vector with both interior and exterior data points, thereby adjusting the calibration in real-time based on the dynamic driving environment.

The system thus overcomes the limitations of current DMS systems by integrating both interior and exterior sensing technologies and using an autocalibration method that effectively aligns targets within the occupant's likely field of view with the occupant's eye position and gaze direction. This dual-focus approach allows for continuous calibration and refined self-assessment, enhancing the system's accuracy in real-world driving scenarios.

The system contributes to a safer and more connected driving experience. By merging interior and exterior data and ensuring non-intrusive calibration, the system enables an accurate and safe monitoring solution suitable for a broad range of drivers, passengers and driving scenarios.

According to an embodiment of the first aspect, the change of the perception relates to a change in the sensor data obtained by the exterior sensor. The system therefore recognizes a change of the perception of the exterior environment of the vehicle as virtual focus point of the occupant. Changes in the exterior environment include for example events like other vehicles or road signs passing by, a traffic light switching color, a vehicle ahead braking suddenly, or a pedestrian attempting to cross the road in front of the vehicle. The system can use these events as passive calibration targets for refining the occupant's gaze vector estimation or determination.

According to an embodiment of the first aspect, the change of the perception relates to a change of the appearance of a device or a display of a device in the interior of the vehicle, in particular a head-up display (HUD) and/or a user-interface (UI) and/or a mirror, wherein the change of the appearance is triggered and/or initiated by the system. For scenarios where a passive calibration by exterior sensor data is inadequate, the system can employ an active calibration method. The system's active calibration is subtle and unobtrusive. Instead of overt pings or alerts that could distract the occupant, it employs for example changes in the HUD, UI, or mirrors. These changes are crafted to naturally draw the occupant's gaze, allowing for a calibration without the occupant's conscious realization. This ensures that the calibration is seamlessly integrated into the driving experience, maintaining focus and safety. Active calibration is employed only during conditions deemed safe by the system's assessment of both interior and exterior factors. This ensures that the calibration does not interfere with vehicle operation or compromises driver attention.

According to an embodiment of the first aspect, the interior sensor comprises a 2D camera and/or a time-of-flight (ToF) camera and/or a stereo camera and/or a radar system and/or a LIDAR system. Data of sensors of this kind allow to accurately track the driver's or other occupant's eye movement, head position, and overall posture. The interior sensor or sensors may be configured to work under various lighting conditions and to adapt to different facial features and expressions. The interior sensor or sensors can be mounted in various positions inside the vehicle cabin, for example at a rear-window mirror and pointing directly at the driver.

According to an embodiment of the first aspect, the exterior sensor comprises a 2D camera and/or a radar system and/or a LIDAR system and/or an ultrasonic sensor. The exterior sensor may employ a range of technologies to capture detailed information about the external environment. The data obtained by the exterior sensor or sensors includes for example information on traffic movement, road conditions, and proximity to other vehicles, but also on road signs or the presence of pedestrians close to the travel path of the vehicle.

According to an embodiment of the first aspect, the computing unit is configured to include a user profile comprising personalized meta-data of the occupant in the estimation of the occupant's gaze vector. The meta-data of the customizable user profiles comprises information on individual variations in vision and facial characteristics, such as for example strabismus or monocular vision. By including customizable user profiles, the system is able to adapt to visual impairments when estimating or determining the occupant's gaze vector. This adaptability may be enhanced by machine learning algorithms, which continuously refine the system's understanding of individual occupant behaviors and preferences.

According to an embodiment of the first aspect, the computing unit is configured to update and/or optimize the user profile and refine the estimate of the occupant's gaze vector by comparing the occupant's gaze vector estimated from interior sensor data and the personalized meta-data with the prediction of the occupant's gaze vector using the virtual focus point, and by minimizing a discrepancy between the estimated and predicted occupant's gaze vector. The system therefore incorporates a self-evaluation mechanism which can detect consistent discrepancies between the estimated and predicted gaze vectors, allowing for automatic adjustments in the calculations. For example, the system might disregard data by the interior sensor from a non-functional eye or apply a fixed offset for strabismus.

According to an embodiment of the first aspect, in case the occupant is the driver of the vehicle, the computing unit is configured to trigger a warning to the driver in response to the estimated driver's gaze vector and/or head posture indicating inattention and/or drowsiness of the driver. The estimate of the driver's gaze vector can be the estimate based on interior data or can be the refined estimate using interior and exterior data. The warning may be a visual, an acoustic or a haptic warning. The warning may be issued by respective systems of the vehicle in response to the DMS computing unit triggering the warning.

According to an embodiment of the first aspect, in case the occupant is the driver of the vehicle, the computing unit is configured to classify an event causing a change of the perception as dangerous event, and in response to the estimated driver's gaze vector being inconsistent with the predicted driver's gaze vector based on the virtual focus point corresponding to said dangerous event, to trigger a warning and/or an action by a vehicle safety system. The combination of interior and exterior monitoring sensors therefore can extend beyond self-calibration, acting as a fail-safe function in critical driving situations. The system may provide alerts in case critical situations, like for example a playing child or a suddenly braking vehicle, are not actively observed by the driver. The alert may be a visual, an acoustic or a haptic alert. The system may integrate seamlessly with existing vehicle safety systems, such as automatic braking or lane-keeping assist. It therefore offers a comprehensive safety response based on the driver's current state of attention.

According to an embodiment of the first aspect, the computing unit is configured to use a Neural Network and/or other machine learning algorithms and/or rule-based algorithms for processing and analyzing sensor data from the interior sensor and/or the exterior sensor. The rule-based algorithms may use a predefined rule set for processing and analyzing sensor data from the interior sensor and/or the exterior sensor. Machine learning algorithms and Neural Networks provide an efficient and cost-effective way of processing and analyzing large amounts of data. They enable to accurately identify virtual focus points in the exterior sensor data, predict the occupant's gaze vector and refine the estimation of the occupant's gaze vector. The use of Neural Networks or machine learning algorithms may therefore enhance the system's ability to continuously refine the system's understanding of individual driver or passenger behaviors and preferences.

In a second aspect, the present disclosure is directed a method of operating a Driver Monitoring System, DMS, for a vehicle, comprising at least one interior sensor configured to monitor an interior of the vehicle, at least one exterior sensor configured to monitor an environment of the vehicle, and a computing unit, wherein the computing unit retrieves, processes and analyzes sensor data from the interior sensor and the exterior sensor; wherein the computing unit identifies a change of the perception in the sensor data from the interior sensor and/or the exterior sensor, wherein the change of the perception is within the field of view of an occupant of the vehicle; and wherein the computing unit assigns a virtual focus point to the identified change of the perception, and derives a prediction of the occupant's gaze vector based on the virtual focus point.

According of an embodiment of the second aspect, the method further comprises the steps of the computing unit using sensor data of the interior sensor to estimate the occupant's gaze vector and/or head posture and the computing unit refining the estimation of the occupant's gaze vector by comparing the occupant's gaze vector estimated from interior sensor data with the prediction of the occupant's gaze vector using the virtual focus point.

The method and its embodiment may be performed by the system described above or any of its embodiments. The description of the system and its embodiments applies accordingly.

The method uses the relationship between the occupant's gaze and changes in the interior or in the external environment of the vehicle to derive predictions of the occupant's gaze vector, enabling to accurately assess the driver's or passenger's attention, particularly in complex driving scenarios. The method therefore contributes to a safer and more connected driving experience. The method is inclusive, cost-effective, and comprehensive as it considers diverse driver conditions and external interactions.

In particular, by integrating both interior and exterior sensing technologies and using an autocalibration method that effectively aligns passive targets within the driver's likely field of view, such as other vehicles and road signs, with the driver's eye position and gaze direction, the system overcomes the limitations of current DMS systems. This dual-focus approach allows for continuous calibration and refined self-assessment, enhancing the accuracy of the estimated driver's gaze vectors.

In a third aspect, the present disclosure is directed at a non-transitory computer readable medium comprising instructions for carrying out several or all steps or aspects of the method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

### DRAWINGS

Exemplary embodiments and functions of the present disclosure are described herein in conjunction with the following drawings, showing schematically:
- Fig. 1: Schematic views of a vehicle equipped with an embodiment of the DMS system
- Fig. 2: Two examples of data obtained by the interior sensor of the embodiment of Fig. 1
- Fig. 3: Flowchart of an embodiment of the method of operating the DMS system of Fig. 1
- Fig. 4: Example view of a scene obtained by an exterior camera
- Fig. 5: Bird's-eye view of the scene of Fig. 4
- Fig. 6: Simplified flowchart of another embodiment of the method of operating the DMS system of Fig. 1
- Fig. 7: Exemplary result of the incorporation of a user profile on the gaze vector estimate of a driver with strabismus

### DETAILED DESCRIPTION

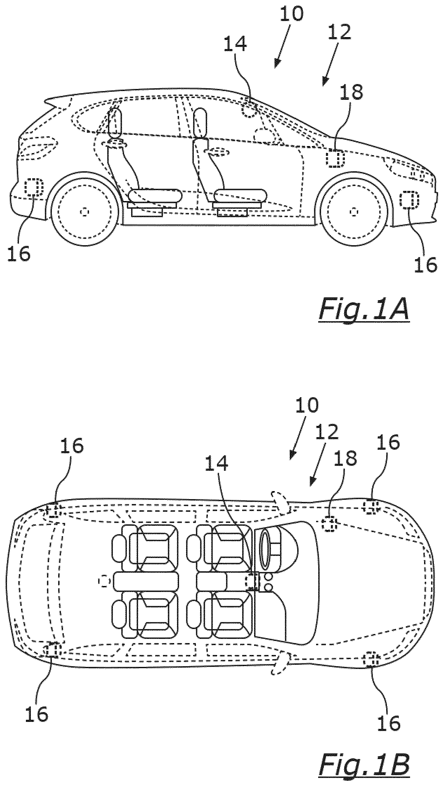

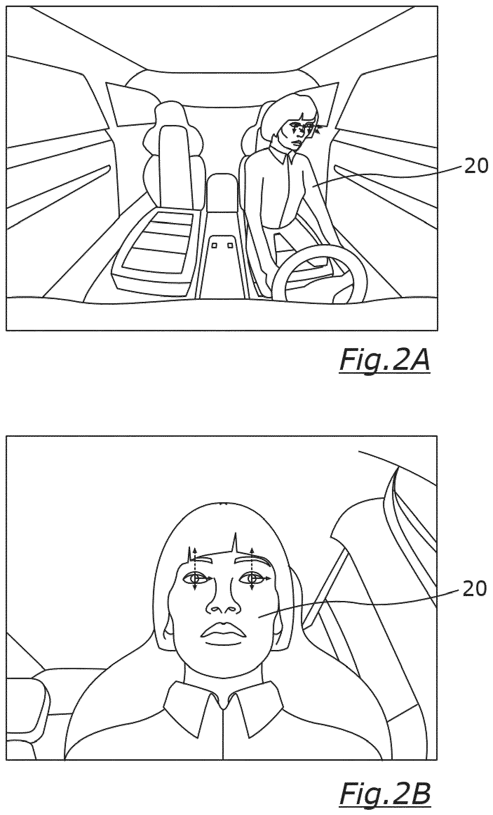

Figs. 1A and 1B depict schematic side and top views of a vehicle 10 equipped with an embodiment of a DMS system 12 according to the present disclosure. The system 12 comprises an interior sensor 14, a plurality of exterior sensors 16 and a computing unit 18. The interior sensor 14 may include for example a 2D camera and/or a time-of-flight (ToF) camera and/or a stereo camera and/or a radar system and/or a LIDAR system. The interior sensor 14 may include a near infrared camera configured to work under various lighting conditions and may be mounted for example at a rear-view mirror of the vehicle 10. Fig. 2A and 2B show examples of data obtained by a rear-view mirror mounted near infrared camera monitoring an occupant 20 of the vehicle 10 (Fig. 2A), and a cluster mounted near infrared camera pointing directly at the driver 20 of the vehicle (Fig. 2B). The interior sensor 14 continuously monitors the driver 20 or occupant 20 of the vehicle 10, enabling to accurately track the driver's or occupant's eye movement, head position, and overall posture.

The plurality of exterior sensors 16 may comprise a 2D camera and/or a radar system and/or a LIDAR system and/or an ultrasonic sensor. The exterior sensors 16 may thus employ a range of technologies to capture detailed information about the external environment of the vehicle 10. The data obtained by the exterior sensors 16 includes for example information on traffic movement, road conditions, and proximity to other vehicles, but also on road signs or the presence of pedestrians close to the travel path of the vehicle 10.

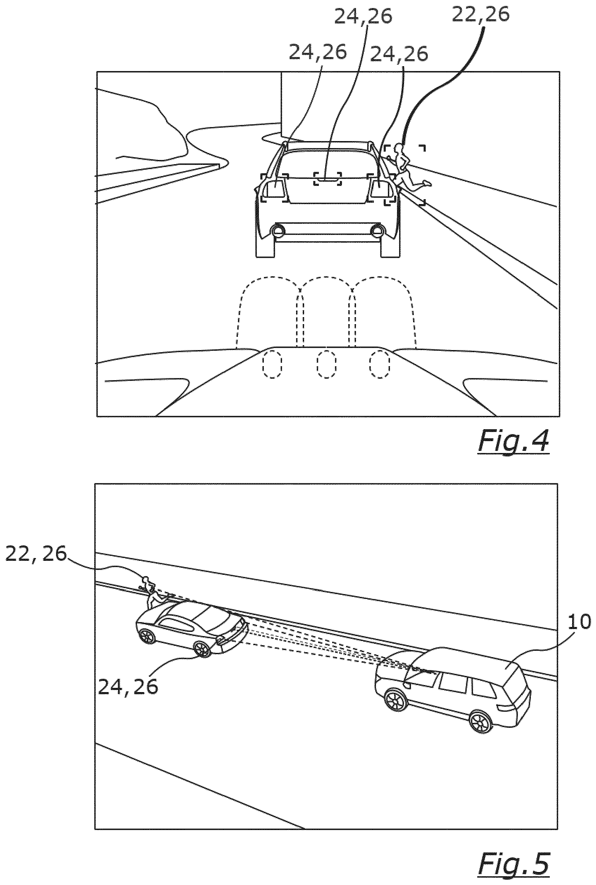

The computing unit 18 is configured to retrieve, process and analyze sensor data from both the interior sensor 14 and the plurality of exterior sensors 16. The computing uses the sensor data to identify changes of the perception in the driver's or occupant's 20 field of view. The identified changes may be changes of the perception of the interior of the vehicle 10 and/or may be changes of the perception of the external environment to the vehicle 10. An event causing a change of the perception within the driver's 20 or occupant's 20 field of view will likely be recognized by the respective person 20. In response, said person 20 will likely turn his/her gaze towards the event. The DMS system 12 therefore uses the position of the identified event and assigns a virtual focus point 26 (see Figs. 4 and 5) for the driver's 20 or occupant's 20 gaze to said event. The virtual focus point 26 may be represented as a direction within the driver's 20 or occupant's 20 field of view. The virtual focus point 26 may also be represented in full 3D including a range and a direction within the driver's 20 or occupant's field 20 of view. The virtual focus point 26 identified and assigned by the computing unit 18 may be used by the computing unit 18 to derive a prediction of the driver's 20 or occupant's 20 gaze vector.

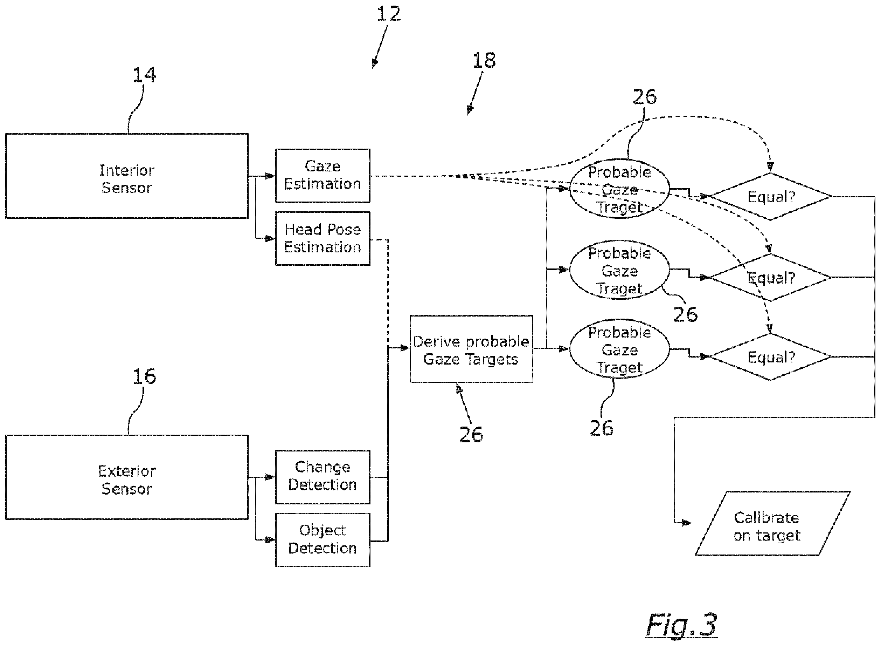

Fig. 3 depicts a flowchart of an embodiment of the method of operating the DMS system 12 of Fig. 1. The method intends to estimate or determine the gaze vector of an occupant 20 or the driver 20 of the vehicle 10. For reasons of conciseness, the description only refers to the estimation of the driver's 20 gaze vector in the following. The method may be performed similarly for estimating the gaze vector of any other occupant or passenger of the vehicle 10.

The method employs an autocalibration of the estimation of the which continually aligns the driver's 20 gaze vector with both interior and exterior data points, thereby adjusting the calibration in real-time based on the dynamic driving environment.

Data obtained by the interior sensor 14 is used by the computing unit 18 to estimate the driver's 20 gaze vector and head posture. As an example, estimates of the driver's 20 and occupants' s 20 gaze vectors are marked by dashed arrows in Figs. 2A and 2B.

The estimate of the driver's 20 gaze vector is refined by comparing it with the prediction of the driver's 20 gaze vector using a plurality of virtual focus 26 points obtained from the analysis of data captured by the plurality of exterior sensors 16.

The computing unit 18 of the system 12 uses the external sensor data to identify changes of the perception in the driver's 20 field of view. The computing unit 18 recognizes a change of the perception of the exterior environment of the vehicle 10 and identifies said change as virtual focus point 26 for the driver 20 ("Derive probable gaze targets" in Fig. 3). Changes in the exterior environment include for example events like other vehicles passing by, a traffic light switching color, a vehicle ahead braking suddenly, or a pedestrian attempting to cross the road in front of the vehicle ("Change Detection" in Fig. 3). Changes in the exterior environment may furthermore include static objects which are detected in the exterior data ("Object Detection" in Fig. 3). Such objects like for example road signs passing by the moving vehicle 20 may also be recognized as a change of the perception of the exterior environment of the vehicle 10 and therefore may be identified as virtual focus point 26 for the driver 20. An additional virtual focus point not relying on a change of the perception may be provided by the driver's 20 head posture estimated from data of the interior sensor 14. This additional virtual focus point may also be used for the prediction of the driver's 20 gaze vector.

Fig. 4 shows an example view of a scene obtained by an exterior camera. The scene shows a second vehicle traveling on a road in front of the vehicle 10. The second vehicle is urged to brake suddenly due to a pedestrian 22 attempting to cross the road. The computing unit 18 recognizes the moving pedestrian 22 and the sudden brake lights 24 as changes of the perception in the driver's 20 field of view and identifies each of them as separate virtual focus points 26 representing probable gaze targets for the driver 20. The system 12 then uses said probable gaze targets 26 for refining the driver's 20 gaze vector estimation.

For the refinement step, the computing unit 18 compares each of the virtual focus points 26 with the estimate of the driver's 20 gaze vector based on interior sensor data. This is done, for example, by the computing unit 18 confirming that the driver's 20 eyes indeed moved in response to the change of the perception, ensuring that the virtual focus point 26 is an accurate reflection of the driver's 20 attention and therefore may be used for a refinement of the driver's 20 gaze vector estimate. If the gaze estimate based on the interior sensor data is similar to the gaze vector to the virtual focus point 26 identified in the exterior data ("Equal?" in Fig. 3), both the interior and exterior data sets are used for refining the estimate or determination of the driver's 20 gaze vector ("Calibrate on target" in Fig. 3).

As example of the method, Fig. 5 shows the scene of Fig. 4 in a bird's eye view, where the probable gaze vectors to the virtual focus points 26 are marked by dashed lines and the estimate of the driver's 20 gaze vector is marked by a dotted line. For refinement, the central virtual focus point 26 located at the central brake light of the second vehicle is compared and aligned with the estimate of the driver's 20 gaze vector by minimizing the discrepancies between the respective vectors.

The method thus integrates both interior and exterior sensor data and implements an autocalibration that effectively aligns targets within the driver's 20 likely field of view, such as other vehicles and road signs, with the driver's 20 eye position and gaze direction. This dual-focus approach allows for continuous calibration and refined self-assessment, enhancing the system's accuracy.

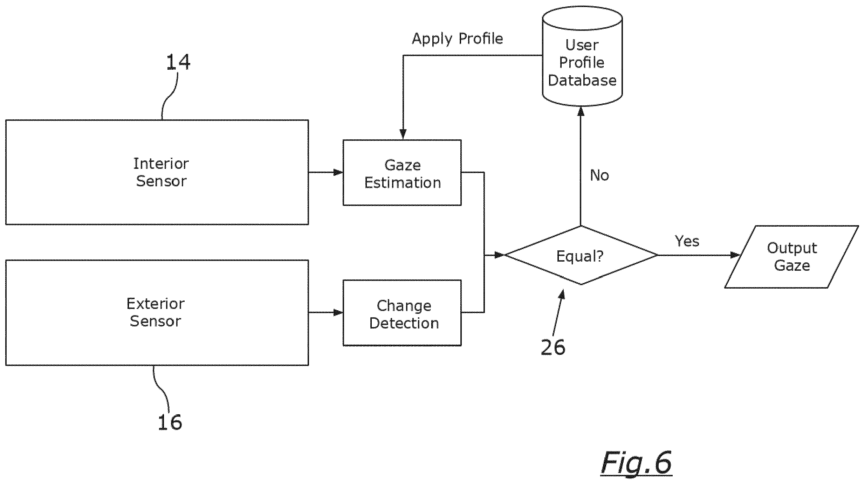

Fig. 6 depicts a simplified flowchart of another embodiment of the method for operating the DMS system of Fig. 1. The method is similar to the method shown in Fig. 3 and described above, but additionally includes a user profile in the calculations of the estimate of the driver's 20 gaze vector. The user profile comprises personalized meta-data of the driver 20 and includes information on individual variations in vision and facial characteristics, such as for example strabismus or monocular vision. By including customizable user profiles, the method is able to adapt to visual impairments when estimating the driver's 20 gaze vector.

The computing unit 18 may update and/or optimize the driver's 20 user profile and refine the estimate of the driver's 20 gaze vector by comparing the driver's 20 gaze vector estimate using interior sensor data and the personalized meta-data with the prediction of the driver's 20 gaze vector using a virtual focus point 26, and by minimizing a discrepancy between the estimated and predicted driver's 20 gaze vector. The method therefore incorporates a self-evaluation mechanism which can detect consistent discrepancies between the predicted and actual gaze vectors, allowing for automatic adjustments in the calculations. For example, the DMS system 12 might disregard data by the interior sensor 14 from a non-functional eye or apply a fixed offset for strabismus. It is thus possible to continuously refine the system's 12 understanding of individual driver 20 behaviors and preferences.

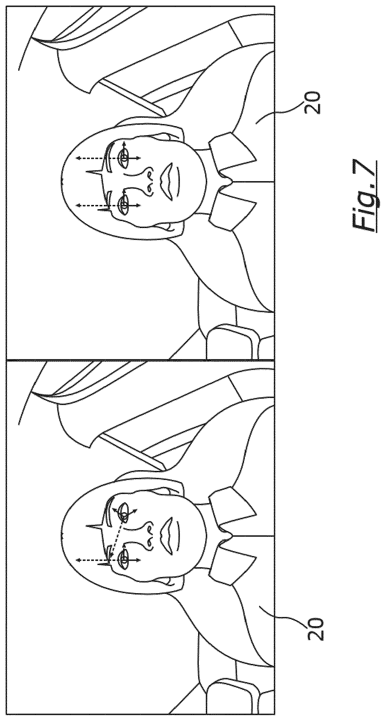

As an example, Fig. 7 shows a result of the incorporation of a user profile on the gaze vector estimate of a driver with strabismus. While the driver's gaze vector estimate marked by dashed arrows in the left panel of Fig. 7 does not include the user profile and therefore is erroneous, the driver's 20 gaze vector estimate shown in the right panel of Fig. 7, obtained after applying a strabismus offset according to the driver's user profile, shows a correct behavior.

### Reference numeral list

- 10: Vehicle
- 12: Driver Monitoring System
- 14: Interior sensor
- 16: Exterior sensor
- 18: Computing unit
- 20: Occupant/Driver of the vehicle
- 22: Pedestrian
- 24: Brake lights of another vehicle
- 26: Virtual focus point / probable gaze target

## Claims

1. Driver Monitoring System (12), DMS, for a vehicle (10), comprising:
at least one interior sensor (14) configured to monitor an interior of the vehicle,
at least one exterior sensor (16) configured to monitor an environment of the vehicle (10), and
a computing unit (18),
wherein the computing unit (18) is configured to:
retrieve, process and analyze sensor data from the interior sensor (14) and
the exterior sensor (16);
identify a change of the perception in the sensor data from the interior sensor (14) and/or the exterior sensor (16), wherein the change of the perception is within the field of view of an occupant (20) of the vehicle (10);
assign a virtual focus point (26) to the identified change of the perception; and
derive a prediction of the occupant's (20) gaze vector based on the virtual focus point (26).

2. The system (12) of claim 1, wherein the computing unit (18) is configured to use sensor data of the interior sensor (14) to estimate the occupant's (20) gaze vector and/or head posture.

3. The system (12) of claim 2, wherein the computing unit (18) is configured to refine the estimate of the occupant's (20) gaze vector by comparing the occupant's (20) gaze vector estimated from interior sensor data with the prediction of the occupant's gaze vector using the virtual focus point (26).

4. The system (12) of any of the preceding claims, wherein the change of the perception relates to a change in the sensor data obtained by the exterior sensor (16).

5. The system (12) of any of the preceding claims, wherein the change of the perception relates to a change of the visual appearance of a device or a display of a device in the interior of the vehicle, in particular a head-up display, HUD, and/or a user-interface, UI and/or a mirror, wherein the change of the appearance is triggered and/or initiated by the system (12).

6. The system (12) of any one of the preceding claims, wherein the interior sensor (14) comprises a 2D camera and/or a time-of-flight, ToF, camera and/or a stereo camera and/or a radar system and/or a LIDAR system.

7. The system (12) of any one of the preceding claims, wherein the exterior sensor (16) comprises a 2D camera and/or a radar system and/or a LIDAR system and/or an ultrasonic sensor.

8. The system (12) of any one of the preceding claims, wherein the computing unit (18) is configured to include a user profile comprising personalized meta-data of the occupant (20) in the estimation of the occupant's (20) gaze vector.

9. The system (12) of claim 8, wherein the computing unit (18) is configured to update and/or optimize the user profile and refine the estimate of the occupant's (20) gaze vector by comparing the occupant's (20) gaze vector estimated from interior sensor data and the personalized meta-data with the prediction of the occupant's (20) gaze vector using the virtual focus point (26), and by minimizing a discrepancy between the estimated and predicted occupant's gaze vector.

10. The system (12) of any one of claims 2 to 9, wherein, in case the occupant (20) is the driver of the vehicle (10), the computing unit (18) is configured to trigger a warning to the driver (10) in response to the estimated driver's (20) gaze vector and/or head posture indicating inattention and/or drowsiness of the driver (20).

11. The system (12) of any one of claims 3 to 10, wherein, in case the occupant (20) is the driver of the vehicle (10), the computing unit (18) is configured to classify an event causing a change of the perception as dangerous event, and in response to the estimated driver's (20) gaze vector being inconsistent with the predicted driver's (20) gaze vector based on the virtual focus point corresponding to said dangerous event, to trigger a warning and/or an action by a vehicle safety system.

12. The system (12) of any one of the preceding claims, wherein the computing unit (18) is configured to use a Neural Network and/or other machine learning algorithms and/or rule-based algorithms for processing and analyzing sensor data from the interior sensor (14) and/or the exterior sensor (16).

13. Method of operating a Driver Monitoring System (12), DMS, for a vehicle (10), comprising at least one interior sensor (14) configured to monitor an interior of the vehicle (10), at least one exterior sensor (16) configured to monitor an environment of the vehicle (10), and a computing unit (18), wherein the computing unit (18) retrieves, processes and analyzes sensor data from the interior sensor (14) and the exterior sensor (16);
wherein the computing unit (18) identifies a change of the perception in the sensor data from the interior sensor (14) and/or the exterior sensor (16), wherein the change of the perception is within the field of view of an occupant (20) of the vehicle (10); and
wherein the computing unit assigns a virtual focus point (26) to the identified change of the perception, and derives a prediction of the occupant's gaze vector based on the virtual focus point.

14. The method of claim 13, further comprising the steps of the computing unit (18) using sensor data of the interior sensor (14) to estimate the occupant's (20) gaze vector and/or head posture and the computing unit (18) refining the estimation of the occupant's (20) gaze vector by comparing the occupant's (20) gaze vector estimated from interior sensor data with the prediction of the occupant's (20) gaze vector using the virtual focus point (26).

15. Non-transitory computer readable medium comprising instructions for carrying out the method of claim 13 or 14.
